# FASCICULE DE BREVET EUROPEEN

(11) **EP 2 178 753 B1**
(45) Date de publication et mention de la délivrance du brevet: **27.02.2013**
(21) Numéro de dépôt: 08828525.9
(22) Date de dépôt: 16.06.2008
(51) Int. Cl.: B64D 29/00, B64D 33/04, F02K 1/72

(54) **NACELLE DE TURBOREACTEUR EQUIPEE D'UN SYSTEME D'INHIBITION MECANIQUE D'UN INVERSEUR DE POUSSEE**
TRIEBSWERKSGONDEL MIT EINEM SYSTEM ZUR MECHANISCHEN HEMMUNG EINES SCHUBUMKEHRERS
JET ENGINE NACELLE EQUIPPED WITH A SYSTEM FOR MECHANICALLY INHIBITING A THRUST REVERSER

(30) Priorité: 20.08.2007 FR 0705889
(43) Date de publication de la demande: 28.04.2010
(73) Titulaire: Aircelle, 76700 Gonfreville l'Orcher (FR)
(72) Inventeur: ROUYER, Pascal, F-76430 Saint Romain de Colbosc (FR); LESTEVEN, Emmanuel, F-27500 Triqueville (FR)
(74) Mandataire: Jouanneau, Lionel
(86) Numéro de dépôt international: PCT/FR2008/000834
(87) Numéro de publication internationale: WO 2009/027591

(56) Documents cités:
- EP-A- 1 286 037
- EP-A- 1 288 479
- EP-A- 1 298 309
- WO-A-03/100241
- US-A- 4 391 409

## Description

La présente invention se rapporte à une nacelle pour turboréacteur.

Une telle nacelle est connue de EP 1286037 A1, qui est considéré comme l'art antérieur le plus proche et décrit les caractéristiques du préambule de la revendication 1.

Un avion est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval intégrant éventuellement des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

Lors d'opérations de maintenance sur un turboréacteur et la nacelle l'entourant, il est important de s'assurer que les capots mobiles ne peuvent pas s'ouvrir de manière inopinée, ce qui représenterait un danger pour les opérateurs.

De la même manière, lorsque les sécurités internes de l'inverseur sont endommagées, sécurités connues sous les termes de verrous primaires (PLS : Primary Lock System) et verrou tertiaire (TLS : Tertiary Lock System), il peut être préférable d'inhiber mécaniquement les capots mobiles plutôt que de risquer un déploiement en vol, ce qui serait catastrophique.

L'inhibition des capots mobiles d'inverseur lors d'opérations de maintenance peut être obtenue par des systèmes d'inhibition électriques et/ou mécaniques. Une inhibition de l'inverseur en vol se fera plutôt mécaniquement.

Une telle inhibition mécanique s'effectue généralement par vissage des capots mobiles à une structure fixe de la nacelle, et/ou par la mise en place de pions de blocage en aval des capots mobiles selon une direction sensiblement radiale, lesdits pions servant alors de moyens de butée empêchant tout mouvement de translation longitudinale du capot mobile.

Un tel système présente de nombreux inconvénients.

Tout d'abord, les pions ou vis doivent être stockés sur l'avion, généralement à l'intérieur d'un logement ménagé dans la nacelle.

Ensuite, la mise en place des pions ou le vissage des capots est une opération longue et fastidieuse nécessitant un outillage adapté.

Par ailleurs, il convient de noter que la nouvelle génération de gros porteurs est équipée de turboréacteurs particulièrement puissants entourés d'une nacelle aux dimensions importantes. Les capots mobiles en sont d'autant plus lourds et leur inhibition mécanique nécessite la mise en place de moyens de retenue particulièrement résistants. Il s'ensuit une multiplication des pions de blocage ou des vis, ce qui n'est pas souhaitable.

On notera également que les capots mobiles d'inverseurs de poussée se présentent généralement sous la forme de deux capots hémicylindriques coulissant sur une structure fixe minimale comprenant une ou plusieurs poutres supérieures situées à environ douze heures au niveau du mât et une ou plusieurs poutres inférieures situées à environ six heures, lesdites poutres de coulissement supportant des rails de guidage des capots mobiles. Pour des raisons de synchronisation des capots mobiles et de sécurité, les deux capots mobiles hémicylindriques peuvent être liés mécaniquement. Il convient donc de prévoir des pions ou des vis qui, en cas de défaillance des autres pions ou vis, sont aptes à supporter la totalité de l'effort généré par l'ensemble des vérins dédiés au déploiement des capots mobiles.

Ainsi, alors qu'une solution évidente pourrait consister à réduire le nombre de pions ou de vis jusqu'à n'en nécessiter qu'éventuellement plus qu'un, ce pion doit être dimensionné pour pouvoir supporter le poids de deux capots mobiles. En effet, un autre problème vient du fait que les vis ou pions traditionnellement utilisés présentent une forme générale cylindrique ou conique et sont par conséquent soumis à des efforts de cisaillement importants lorsque le capot mobile vient les contraindre. Un deuxième problème est donc d'améliorer la répartition des efforts s'exerçant sur le pion afin de pouvoir en optimiser le dimensionnement.

On atteind ce but de l'invention avec une nacelle pour turboréacteur comprenant une section avant d'entrée d'air, une section médiane destinée à entourer une soufflante de turboréacteur et une section arrière équipée d'au moins un système d'inversion de poussée comprenant, d'une part, des moyens de déviation d'au moins une partie d'un flux d'air du turboréacteur, et d'autre part, au moins un capot monté mobile en translation le long d'au moins un rail de guidage selon une direction sensiblement parallèle à un axe longitudinal de la nacelle, ledit capot mobile étant apte à passer alternativement d'une position de fermeture dans laquelle il assure la continuité aérodynamique de la nacelle et couvre les moyens de déviation, à une position d'ouverture dans laquelle il ouvre un passage dans la nacelle et découvre lesdits moyens de déviation, la nacelle étant caractérisée en ce que la section arrière est équipée d'au moins un pion d'inhibition mécanique monté mobile sur une structure fixe de la section arrière au niveau du rail de guidage entre une position rétractée, dans laquelle ledit pion est écarté du chemin de déplacement du rail et permet une translation du capot mobile, et une position engagée, dans laquelle il forme une butée apte à empêcher le coulissement du capot mobile vers l'aval de la nacelle. Le pion mobile est équipé de moyens d'actionnement manuels.

Ainsi, en installant un système d'inhibition intégré, il n'est plus nécessaire de prévoir un montage et démontage des moyens d'inhibition mécanique, ni leur stockage sur la nacelle. En outre, le pion étant localisé au niveau d'une structure fixe, il utilise les chemins principaux de transmission d'effort et une partie de la charge supportée par le pion pourra plus facilement être répartie sur la structure fixe supportant l'inverseur.

Avantageusement, ledit pion est monté mobile dans un plan de coulissement du rail et perpendiculairement à ce dernier. En effet, il a été constaté qu'une insertion du pion selon cette direction permettait une meilleure répartition des efforts dans le pion.

Selon une variante de réalisation, le pion mobile est équipé de moyens d'actionnement électriques.

De manière avantageuse, le pion mobile est associé à des moyens de signalisation de son état d'engagement et/ou de rétractation.

Préférentiellement, le pion présente une surface de contact avec le rail sensiblement plane. Ainsi, en prévoyant une surface de contact plane, on favorise une reprise d'efforts en compression et limite donc les efforts en cisaillement.

Avantageusement, la surface de contact du pion est adaptée au profil du rail.

De manière avantageuse, au moins un pion est monté sur une poutre longitudinale inférieure de la structure arrière.

Préférentiellement, la nacelle selon l'invention comprend deux capots mobiles hémicylindriques.

Préférentiellement encore, les capots sont aptes à être mécaniquement liés entre eux. Cette liaison peut être permanente ou déverrouillable. De cette manière, les deux capots mobiles ne forment plus qu'une seule entité mécanique, ce qui permet, pourvu que celui-ci soit dimensionné de manière adéquate, de réduire le nombre de pion d'inhibition à un unique pion pour l'ensemble des capots mobiles.

Selon un mode préféré de réalisation de l'invention, le pion mobile est monté sur une structure fixe de la section arrière par l'intermédiaire d'un système d'entraînement comprenant au moins une bielle montée pivotante sur ladite structure fixe

D'autres caractéristiques et avantages de la présente invention apparaîtront à la lumière de la description qui va suivre et à l'examen des figures annexées dans lesquelles :
- la figure 1 est une représentation schématique d'une nacelle de turboréacteur vue de dessous.
- la figure 2 est une vue agrandie d'une partie inférieure arrière de la nacelle de la figure 1.

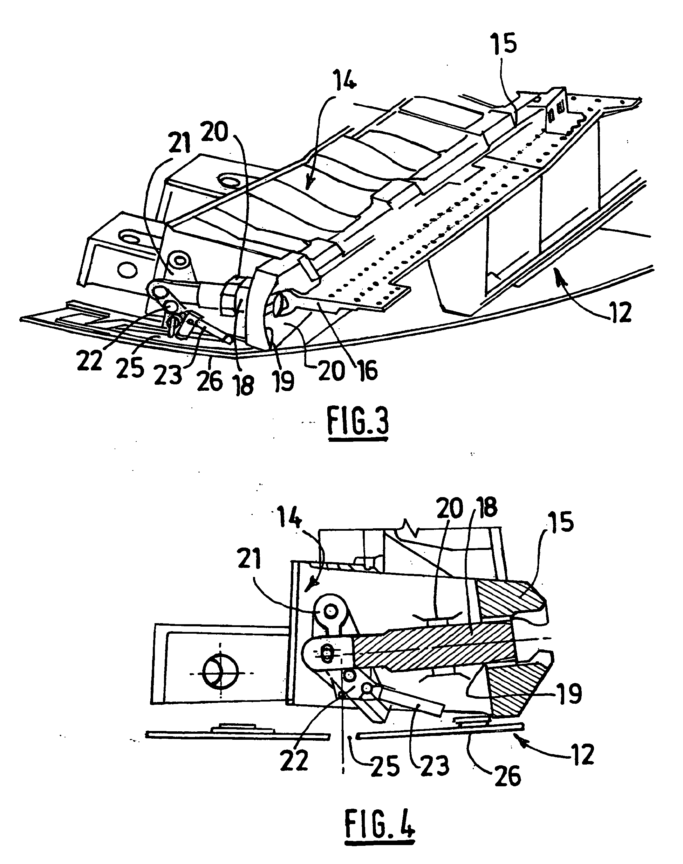

- la figure 3 est une représentation schématique partielle d'un capot mobile d'inverseur de poussée monté coulissant le long d'un rail solidaire d'une poutre équipée d'un pion amovible d'inhibition mécanique.
- la figure 4 est une vue de face en coupe du pion de la figure 3 en position rétractée.

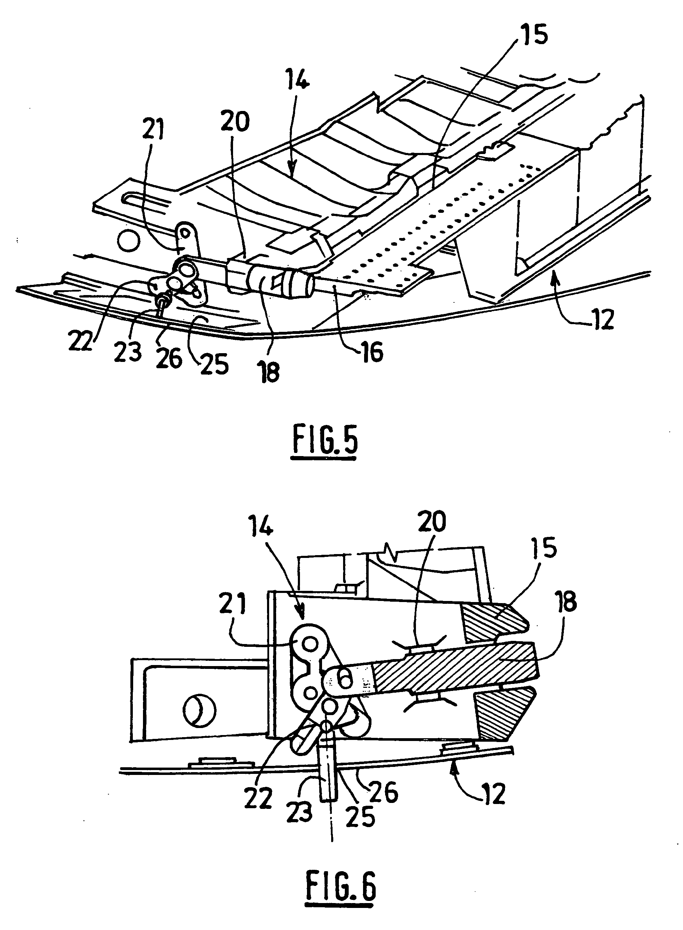

- la figure 5 se différencie de la figure 3 par le fait que le pion mobile est en position d'engagement permettant l'inhibition du capot mobile.
- la figure 6 est l'équivalent de la figure 4 montrant le pion en position d'engagement.

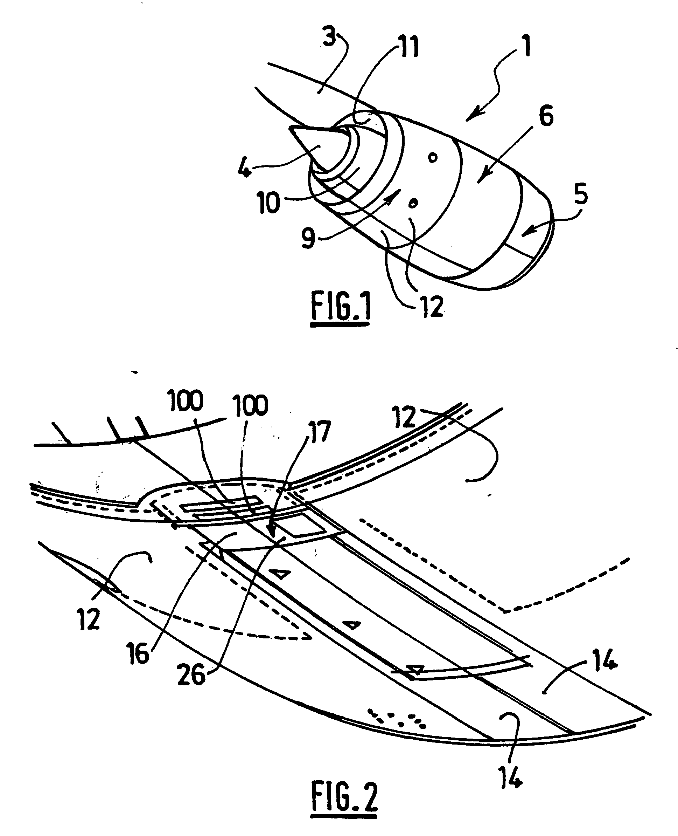

La figure 1 représente une nacelle 1 pour turboréacteur double flux.

La nacelle 1 constitue un logement tubulaire pour un turboréacteur 4 dont elle sert à canaliser les flux d'air qu'il génère et est destinée à être rattachée sous une aile (non visible) d'un avion par l'intermédiaire d'un mât 3 oblique orienté vers l'avant de l'avion. Elle abrite également différents composants nécessaires au fonctionnement du turboréacteur 4.

Plus précisément, la nacelle 1 possède une structure externe comprenant une section avant formant une entrée d'air 5, une section médiane 6 entourant une soufflante (non visible) du turboréacteur, et une section arrière 9 entourant le moteur et comprenant un système d'inversion de poussée.

La section arrière 9 prolonge la section médiane 6 et comprend une structure externe assurant la continuité aérodynamique avec la section médiane 6 et abritant les moyens d'inversion de poussée. Elle comprend également une structure interne 10 de carénage du moteur 4 définissant avec la structure externe une veine 11 destinée à la circulation d'un flux d'air froid dans le cas d'un turboréacteur double flux tel qu'ici représenté.

Le système d'inversion de poussée comprend des capots mobiles 12 en translation apte à passer alternativement, d'une part, d'une position de fermeture dans laquelle il couvre des grilles de déviation (non visibles) et assure la continuité structurelle de la section médiane 6 permettant ainsi l'évacuation du flux froid à travers la veine 11 en jet dit direct, et d'autre part, à une position d'ouverture dans laquelle il découvre les grilles de déviation, ouvrant alors un passage dans la nacelle 1, et bloque, lui-même ou par l'activation de moyens de blocage distincts, la veine 11 en aval des grilles de déviation permettant ainsi la réorientation du flux froid selon un jet dit inversé.

Les capots mobiles 12 sont montés en translation le long de rails de guidage 15 solidaires d'une structure fixe de la section arrière 9.

Plus précisément, la section arrière 9 est réalisée sous la forme de deux demi-parties latérales situées de part et d'autre de la nacelle 1 apte à s'ouvrir pour permettre un accès au turboréacteur 4.

Chaque demi-partie comprend un bord supérieur équipé de moyens d'attache (non visibles) au mât 3 du type verrous (pour une ouverture latérale) ou charnières (pour une ouverture radiale) et un bord inférieur équipé de moyens de verrouillage aptes à assurer la fermeture des deux demi-parties.

Chaque demi-partie comprend donc une structure fixe réalisée à partir d'une poutre longitudinale supérieure (non visible) située au voisinage du mât 3 et une poutre longitudinale inférieure 14, chacune de ces poutres comportant au moins un rail 15 de guidage à l'intérieur duquel est inséré un coulisseau 16 correspondant appartenant au capot mobile 12 associé.

En outre, le capot mobile 12 de chaque partie est mécaniquement lié au capot mobile 12 de l'autre partie par des moyens de liaison 100 déverrouillables sur une partie de la longueur des capots mobiles 12 située en aval des rails 15 de guidage des poutres longitudinales inférieures 14.

Comme expliqué précédemment, l'inverseur de poussée est équipé de plusieurs système de verrouillage, à savoir, des verrous primaires (non visibles), un verrou tertiaire 16 et un système d'inhibition mécanique 17, objet de la présente invention.

Le système d'inhibition mécanique 17 se présente sous la forme d'un pion 18 de blocage monté mobile au niveau d'une extrémité aval d'une poutre longitudinale inférieure 14 selon une direction transversale à cette dernière et à travers une ouverture 19 correspondante ménagée dans une surface latérale 20 au niveau d'une extrémité du rail 16 correspondant, ledit pion 18 étant par ailleurs monté mobile sur la poutre longitudinale 14 entre une position rétractée dans laquelle le pion 18 ne dépasse pas de la surface latérale et une position d'engagement dans laquelle le pion 18 vient en saillie de la surface latérale à travers l'ouverture 19 de manière à constituer une butée terminale de fin du rail 16.

Un anneau de guidage 20 solidaire de la poutre 14 permet d'assurer une bonne translation du pion 18.

L'actionnement du pion 18 est prévu manuellement par l'intermédiaire d'un système de biellettes 21 permettant de transformer un mouvement de basculement d'une poignée en mouvement de translation du pion 18.

Ce système de biellettes 21 est associé à un système secondaire de biellettes 22 apte à provoquer simultanément le mouvement d'un marqueur d'état 23 entre une position de retrait correspondant à la position de rétractation du pion 18 et dans laquelle ledit marqueur d'état 23 vient en retrait d'une paroi du capot mobile 12 et une position d'engagement correspondant à la position d'engagement du pion 18 et dans laquelle ledit marqueur d'état 23 vient en saillie du capot mobile 12 à travers une fente 25 correspondante.

Avantageusement, une partie de la paroi du capot mobile 12 comprenant la fente 25 sera réalisée sous la forme d'une trappe 26 permettant d'accéder aux moyens de commande manuels du pion 18 d'inhibition.

On pourra bien évidemment, alternativement ou de manière complémentaire, prévoir des moyens d'actionnement électrique du pion 18 ainsi que des moyens lumineux de signalisation d'état.

Comme précisé supra, les capots mobiles 12 étant liés mécaniquement, il est possible, comme l'exemple décrit ici, de n'avoir qu'un unique pion 18 d'inhibition apte à assurer le blocage de l'ensemble des capots.

Bien évidemment, dans le cas où les capots mobiles 12 ne sont pas liés mécaniquement, il conviendra de prévoir un système d'inhibition 17 par capot mobile 12.

Par ailleurs, il convient de noter que conformément à un aspect préféré de l'invention, le pion 18 présente une surface de contact avec le coulisseau 16 qui est sensiblement plane de manière à favoriser une reprise des efforts en compression plutôt qu'en cisaillement.

Bien entendu, la présente invention n'est nullement limitée aux modes de réalisation décrits et représentés, fournis à titre de simples exemples illustratifs.

## Revendications

1. Nacelle (1) pour turboréacteur (4) comprenant une section avant (5) d'entrée d'air, une section médiane (6) destinée à entourer une soufflante de turboréacteur et une section arrière (9) équipée d'au moins un système d'inversion de poussée comprenant, d'une part, des moyens de déviation d'au moins une partie d'un flux d'air du turboréacteur, et d'autre part, au moins un capot (12) monté mobile en translation le long d'au moins un rail (15) de guidage selon une direction sensiblement parallèle à un axe longitudinal de la nacelle, ledit capot mobile étant apte à passer alternativement d'une position de fermeture dans laquelle il assure la continuité aérodynamique de la nacelle et couvre les moyens de déviation, à une position d'ouverture dans laquelle il ouvre un passage dans la nacelle et découvre lesdits moyens de déviation, la section arrière étant équipée d'au moins un pion (18) d'inhibition mécanique monté mobile sur une structure fixe de la section arrière au niveau du rail de guidage entre une position rétractée, dans laquelle ledit pion est écarté du chemin de déplacement du rail et permet une translation du capot mobile, et une position engagée, dans laquelle il forme une butée apte à empêcher le coulissement du capot mobile vers l'aval de la nacelle
**caractérisée en ce que** le pion (18) d'inhibition est équipé de moyens d'actionnement manuels (21).

2. Nacelle (1) selon la revendication 1, **caractérisée en ce que** ledit pion (18) d'inhibition mécanique est monté mobile dans un plan de coulissement du rail (15) et perpendiculairement au dit rail.

3. Nacelle (1) selon l'une quelconque des revendications 1 à 2, **caractérisé en ce que** le pion (18) d'inhibition mécanique mobile est équipé de moyens d'actionnement électriques.

4. Nacelle (1) selon l'une quelconque des revendications 1 à 3, **caractérisé en ce que** le pion (18) d'inhibition mécanique mobile est associé à des moyens de signalisation (23) de son état d'engagement et/ou de rétractation.

5. Nacelle (1) selon l'une quelconque des revendications 1 à 4, **caractérisée en ce que** le pion (18) d'inhibition mécanique présente une surface de contact avec le rail (15) sensiblement plane.

6. Nacelle (1) selon la revendication 5, **caractérisée en ce que** la surface de contact du pion (18) d'inhibition mécanique est adaptée au profil du rail (15).

7. Nacelle (1) selon l'une quelconque des revendications 1 à 6, **caractérisée en ce qu'**au moins un pion (18) d'inhibition mécanique est montée sur une poutre longitudinale inférieure (14) de la structure arrière (9).

8. Nacelle (1) selon l'une quelconque des revendications 1 à 7, **caractérisée en ce qu'**elle comprend deux capots mobiles (12) hémicylindriques.

9. Nacelle (1) selon la revendication 8, **caractérisée en ce que** les capots (12) sont aptes à être mécaniquement liés entre eux.

10. Nacelle (1) selon l'une quelconque des revendications 1 à 9, **caractérisé en ce que** le pion (18) d'inhibition mécanique mobile est monté sur une structure fixe de la section arrière par l'intermédiaire d'un système d'entraînement comprenant au moins une bielle (21) montée pivotante sur ladite structure fixe.

## Claims

1. A jet engine (4) nacelle (1) comprising a front air inlet section (5), a middle section (6) designed to surround a jet engine fan, and a rear section (9) equipped with at least one thrust reverser system comprising cascade means for at least part of the airflow from the turbojet engine on the one hand, and at least one cowl (12) mounted translatable along at least one guide rail (15) for guiding in a direction substantially parallel to a longitudinal axis of the nacelle on the other hand, said moving cowl being able to go alternately from the closed position, in which it ensures the aerodynamic continuity of the nacelle and covers the cascade means, to an open position, in which it opens a passage in the nacelle and exposes said cascade means, the rear section being equipped with at least one mechanical inhibiting slug (18) movably mounted on a stationary structure of the rear section at the guide rail between a retracted position, in which said slug is spaced away from the movement path of the rail and allows translation of the moving cowl, and an engaged position, in which it forms a stop capable of preventing the moving cowl from sliding in the downstream direction of the nacelle, **characterized in that** the inhibiting slug (18) is equipped with manual actuating means (21).

2. The nacelle (1) according to claim 1, **characterized in that** said mechanical inhibiting slug (18) is movably mounted in a sliding plane of the rail (15) and perpendicular to said rail.

3. The nacelle (1) according to any one of claims 1 and 2, **characterized in that** the moving mechanical inhibiting slug (18) is equipped with electric actuating means.

4. The nacelle (1) according to any one of claims 1 to 3, **characterized in that** the moving mechanical inhibiting slug (18) is associated with means (23) for signaling whether it is in the engaged and/or retracted state.

5. The nacelle (1) according to any one of claims 1 to 4, **characterized in that** the mechanical inhibiting slug (18) has a substantially planar contact surface with the rail (15).

6. The nacelle. (1) according to claim 5, **characterized in** the contact surface of the mechanical inhibiting slug (18) is adapted to the profile of the rail (15).

7. The nacelle (1) according to any one of claims 1 to 6, **characterized in that** at least one mechanical inhibiting slug (18) is mounted on a lower longitudinal beam (14) of the rear structure (9).

8. The nacelle (1) according to any one of claims 1 to 7, **characterized in that** it comprises two semi-cylindrical moving cowls (12).

9. The nacelle (1) according to claim 8, **characterized in that** the cowls (12) can be mechanically connected to one another,

10. The nacelle (1) according to any one of claims 1 to 9, **characterized in that** the moving mechanical inhibiting slug (18) is mounted on a stationary structure of the rear section by means of a drive system comprising at least one connecting rod (21) pivotably mounted on said stationary structure,

## Patentansprüche

1. Gondel (1) für ein Turbotriebwerk (4), die einen vorderen Lufieintriflssektor (5), einen mittleren Sektor (6), der dazu bestimmt ist, ein Turbotriebwerksgebläse zu umschließen, und einen hinteren Sektor (9), der mit mindestens einem Schubumkehrsystem ausgestattet ist, umfasst, der einerseits Umleitungsmittel mindestens eines Teils eines Luftstroms des Turbotriebwerks und andererseits mindestens eine Abdeckung (12) umfasst, die entlang mindestens einer Führungsschiene (15) gemäß einer etwa parallelen Richtung zu einer Längsachse der Gondel verschiebbar beweglich montiert ist, wobei die bewegliche Abdeckung imstande ist, abwechselnd von einer geschlossenen Stellung, in der sie die aerodynamische Kontinuität der Gondel gewährleistet und die Umleitungsmittel bedeckt, in eine geöffnete Stellung, in der sie einen Durchgang in der Gondel öffnet und die Umleitungsmittel abdeckt, zu wechseln, wobei der hintere Sektor mit mindestens einem mechanischen Hemmungsstift (18) ausgestattet ist, der auf einer starren Struktur des hinteren Sektors auf Ebene der Führungsschiene zwischen einer zurückgezogenen Stellung, in der der Stift von Verlagerungsweg der Schiene entfernt ist und eine Verlagerung der beweglichen Abdeckung erlaubt, und einer eingesetzten Stellung, in der er einen Anschlag bildet, der imstande ist, das Gleiten der bewegbaren Abdeckung in die stromabwärtige Richtung der Gondel zu erlauben, beweglich montiert ist,
**dadurch gekennzeichnet, dass** der mechanische Hemmungsstift (18) mit manuellen Betätigungsmitteln (21) ausgestattet ist.

2. Gondel (1) nach Anspruch 1, **dadurch gekennzeichnet, dass** der mechanische Hemmungsstift (18) in einer Gleitebene der Schiene (15) und senkrecht zu der Schiene beweglich montiert ist.

3. Gondel (1) nach einem der Ansprüche 1 bis 2, **dadurch gekennzeichnet, dass** der bewegliche mechanische Hemmungsstift (18) mit elektrischen Betätigungsmitteln ausgestattet ist.

4. Gondel (1) nach einem der Ansprüche 1 bis 3, **dadurch gekennzeichnet, dass** der bewegliche mechanische Hemmungsstift (18) mit Anzeigemitteln (23) seines eingesetzten und/oder zurückgezogenen Zustands verbunden ist.

5. Gondel (1) nach einem der Ansprüche 1 bis 4, **dadurch gekennzeichnet, dass** der mechanische Hemmungsstift (18) eine etwa ebene Kontaktfläche mit der Schiene (15) aufweist.

6. Gondel (1) nach Anspruch 5, **dadurch gekennzeichnet, dass** die Kontaktfläche des mechanischen Hemmungsstifts (18) an das Profil der Schiene (15) angepasst ist.

7. Gondel (1) nach einem der Ansprüche 1 bis 6, **dadurch gekennzeichnet, dass** mindestens ein mechanischer Hemmungsstift (18) auf einem unteren Längsbalken (14) der hinteren Struktur (9) montiert ist.

8. Gondel (1) nach einem der Ansprüche 1 bis 7, **dadurch gekennzeichnet, dass** sie zwei halbzylindrische bewegliche Abdeckungen (12) umfasst.

9. Gondel (1) Anspruch 8, **dadurch gekennzeichnet, dass** die Abdeckungen (12) imstande sind, mechanisch miteinander verbunden zu sein.

10. Gondel (1) nach einem der Ansprüche 1 bis 9, **dadurch gekennzeichnet, dass** der bewegliche mechanische Hemmungsstift (18) auf einer starren Struktur des hinteren Sektors über ein Antriebssystem befestigt ist, das mindestens eine Pleuelstange (21) umfasst, die drehbar auf der starren Struktur befestigt ist.
